# EUROPÄISCHE PATENTANMELDUNG

(11) **EP 1 069 303 A2**
(43) Veröffentlichungstag der Anmeldung: **17.01.2001**
(21) Anmeldenummer: 00113182.0
(22) Anmeldetag: 03.07.2000
(51) Int. Cl.: F02M 25/07

(54) **Brennkraftmaschine mit Abgasrückführung und Verfahren zur Abgasrückführung**

(30) Priorität: 14.07.1999 DE 19932792
(71) Anmelder: Volkswagen Aktiengesellschaft, 38436 Wolfsburg (DE)
(72) Erfinder: Wischmann, Hein-Werner, Dipl.-Ing., verstorben (DE)

(57) **Zusammenfassung**

Die Erfindung betrifft eine Brennkraftmaschine, insbesondere eines Kraftfahrzeuges, mit einer Sauganlage (10) mit Saugrohr zur Verbrennungsluftversorgung und einer Abgasanlage (12), wobei zwischen der Abgasanlage (12) und der Sauganlage (10) eine Abgasrückführungsanlage mit einem Abgasrückführungsventil (18) und einer Abgasrückführungsleitung (16) zur Rückführung von Abgas (27) aus der Abgasanlage (12) an die Sauganlage (10) vorgesehen ist. Hierbei ist die Abgasrückführungsleitung (18, 28, 30) wenigstens teilweise in dem Saugrohr verlaufend und in thermischen Kontakt mit Saugluft (26) in dem Saugrohr angeordnet.

## Beschreibung

Die Erfindung betrifft ein Brennkraftmaschine mit einer Sauganlage mit Saugrohr zur Verbrennungsluftversorgung und einer Abgasanlage, wobei zwischen der Abgasanlage und der Sauganlage eine Abgasrückführungsanlage mit einem Abgasrückführungsventil und einer Abgasrückführungsleitung zur Rückführung von Abgas aus der Abgasanlage an die Sauganlage vorgesehen ist, gemäß dem Oberbegriff des Anspruchs 1. Die Erfindung betrifft ferner ein Verfahren zum Rückführen von Abgas bei einer Brennkraftmaschine aus einem Abgasstrom in einen Saugluftstrom mit Saugrohr, gemäß dem Oberbegriff des Anspruchs 6.

Bei der Abgasrückführung (AGR oder EGR = Exhaust Gas Recirculation) wird ein Teil des Abgases kurz hinter dem Abgaskrümmer entnommen und der Ansaugluft im Ansaugrohr über ein EGR-Ventil wieder beigemischt und damit dem Motor zurückgeführt. Wegen der begrenzten thermischen Belastbarkeit von Bauteilen in dem EGR-Ventil, wie beispielsweise Spulen einer elektrischen Ventilbetätigung, die Temperaturen von maximal 180°C bis 230°C widerstehen, ist es erforderlich, das heiße Abgas vor dem Durchlauf durch das EGR-Ventil zu kühlen. Hierzu ist es beispielsweise aus der US 4 258 687 bekannt, an der Unterseite einer Ansaugverrohrung einen wassergekühlten EGR-Kühler vorzusehen. Diese Anordnung ist jedoch aufwendig, teuer und benötigt viel Bauraum, weshalb die Realisation bei einem V-Motor vorgeschlagen wird, wo sich im Tal der V-förmigen Anordnung der Zylinder überschüssiger Bauraum befindet, der durch den EGR-Kühler ausgefüllt wird.

Aus der DE 35 18 493 C2 ist es bekannt, einen Teil einer Abgasrückführungsleitung parallel zu einer Warmluftansaugleitung anzuordnen, welche am Abgaskrümmer vorbeiströmende und damit vorgewärmte Luft ansaugt, so daß durch einen Wärmeaustausch zwischen der Ansaugluft in der Warmluftansaugleitung und der Abgasrückführungsleitung die Ansaugluft in der Warmluftansaugleitung zusätzlich erwärmt und gleichzeitig Nebenaggregate vor Wärmeabstrahlung der Abgasruckführungsleitung geschützt sind. Das EGR-Ventil befindet sich jedoch nahe am Abgaskrümmer und hat aufgrund hoher thermischer Belastung nur eine begrenzte Lebensdauer.

Der vorliegenden Erfindung liegt daher die Aufgabe zugrunde, eine verbesserte Brennkraftmaschine sowie ein verbesserte Verfahren der obengenannten Art zur Verfügung zu stellen, wobei die obengenannten Nachteile überwunden werden und auf einfache, kostengünstige und wenig Bauraum benötigende Weise eine Abgasrückführung mit insbesondere reduzierter thermischer Belastung des Abgasrückführungsventils erzielt wird.

Diese Aufgabe wird erfindungsgemäß durch eine Brennkraftmaschine der o.g. Art mit den in Anspruch 1 gekennzeichneten Merkmalen und durch ein Verfahren der o.g. Art mit den in Anspruch 6 gekennzeichneten Merkmalen gelöst. Vorteilhafte Ausgestaltungen der Erfindung sind in den abhängigen Ansprüchen angegeben.

Dazu ist es bei einer Brennkraftmaschine der o.g Art erfindungsgemäß vorgesehen, daß die Abgasrückführungsleitung wenigstens teilweise in dem Saugrohr verlaufend und in thermischen Kontakt mit Saugluft in dem Saugrohr angeordnet ist.

Dies hat den Vorteil, daß eine Kühlung des rückgeführten Abgases ohne zusätzlichen Abgasluftkühler erfolgt, wobei durch die Integration der Kühlfunktion in das Saugrohr ein minimaler Bauraum erforderlich ist.

In einer bevorzugten Ausführungsform weist das Saugrohr einen Luftsammler auf, wobei der in dem Saugrohr befindliche Teil der Abgasrückführungsleitung wenigstens teilweise in dem Luftsammler angeordnet ist.

Eine weitere Reduzierung des Bauraumbedarfs bei gleichzeitig einfacher Montage erzielt man dadurch, daß die Abgasrückführungsleitung einstückig mit dem Saugrohr ausgebildet ist.

Zum Vermindern einer thermischen Belastung des Abgasrückführungsventils ist dieses stromab des durch das Saugrohr verlaufenden Teiles der Abgasrückführungsleitung angeordnet.

In einer bevorzugten Ausführungsform ist das Abgasrückführungsventil an das Saugrohr, insbesondere an einen Luftsammler des Saugrohres, angeflanscht.

Bei einem Verfahren der o.g. Art ist es erfindungsgemäß vorgesehen, daß das rückgeführte Abgas vor einer Einspeisung in den Saugluftstrom derart durch das Saugrohr geführt wird, daß das heiße Abgas Wärme mit dem kühlen Saugluftstrom in dem Saugrohr austauscht.

Dies hat den Vorteil, daß auf einfache und effektive Weise eine Kühlung des rückgeführten Abgases und erzielt wird.

Zweckmäßigerweise wird das Abgas vor einem Abgasrückführungsventil durch das Saugrohr geführt, so daß sich eine reduzierte thermische Belastung des Abgasrückführungsventils ergibt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform eines Sauganlagenteiles und eines Abgasanlagenteiles einer erfindungsgemäßen Brennkraftmaschine als schematisches Drahtmodell und
- Fig. 2: ein Saugrohroberteil einer erfindungsgemäßen Brennkraftmaschine als schematisches Drahtmodell,
- Fig. 3: eine Draufsicht auf eine Ausführungsform eines Sauganlagenteiles,
- Fig. 4: einen Schnitt entlang der Linie IV -IV gemäß Figur 3,

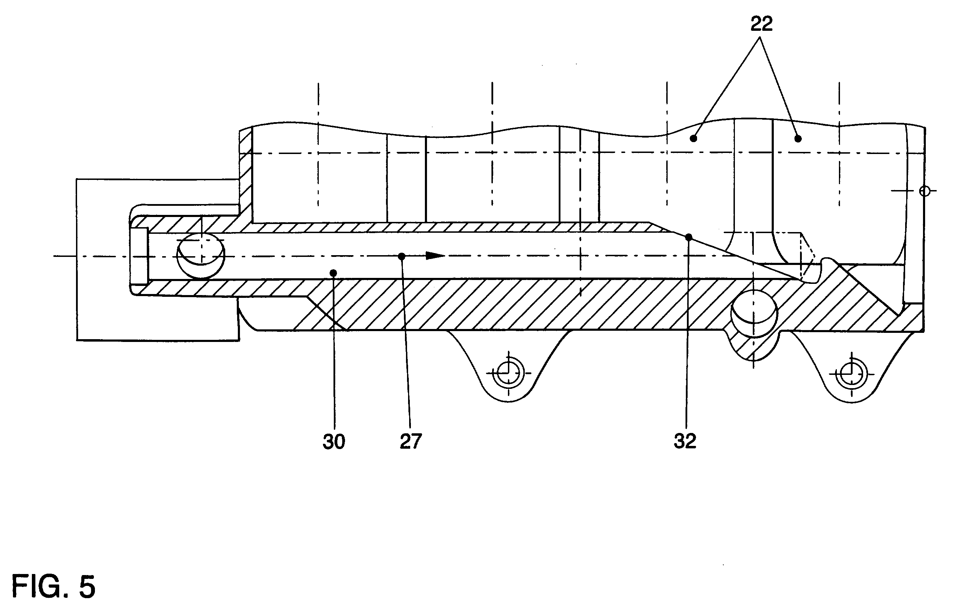

- Fig. 5: einen Schnitt entlang der Linie V - V gemäß Figur 3 und

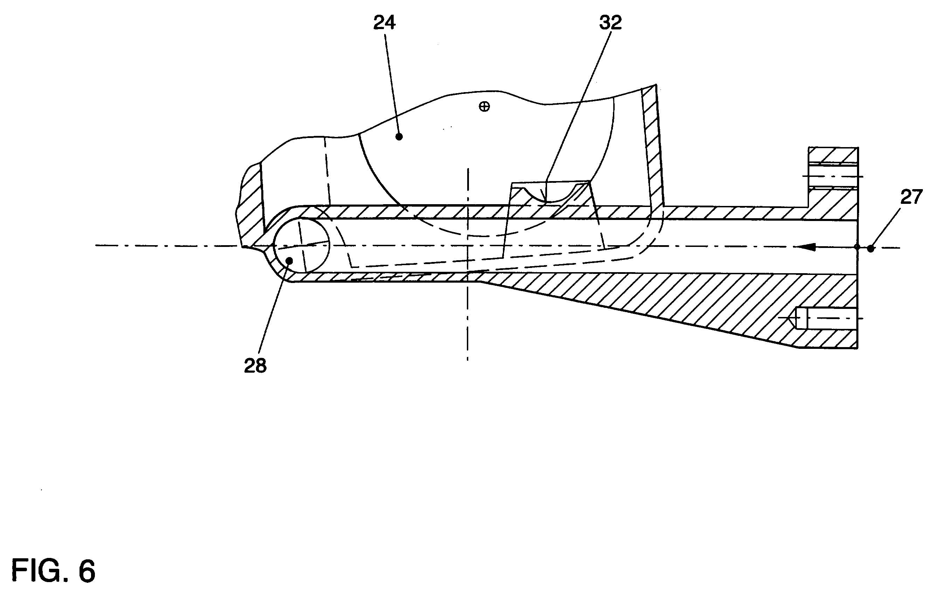

- Fig. 6: einen Schnitt entlang der Linie VI - VI gemäß Figur 3.

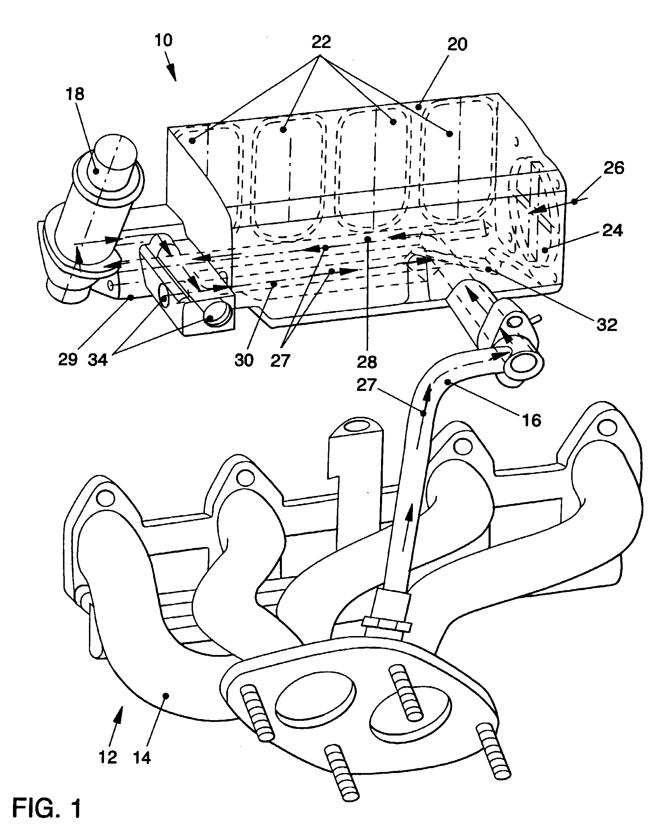

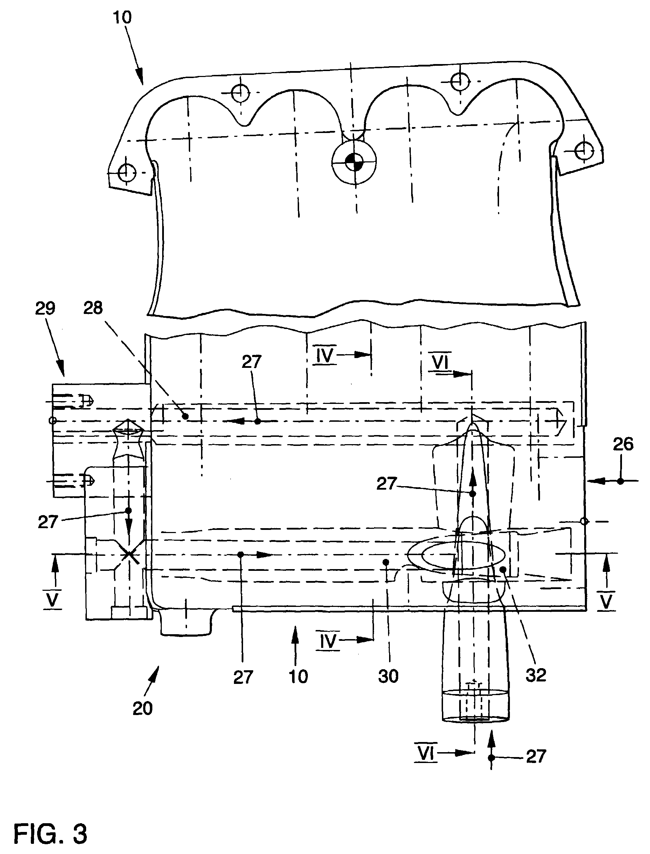

Fig. 1 zeigt einen Sauganlagenteil 10 und einen Abgasanlagenteil 12 mit einem Abgaskrümmer 14 einer ansonsten nicht näher dargestellten Brennkraftmaschine, wobei eine die Abgasanlage 12 mit der Sauganlage 10 verbindende Abgasrückführungsanlage vorgesehen ist, welche folgendes umfaßt, eine mit dem Abgaskrümmer 14 verbundene Abgasrückführungsleitung 16 und ein elektrisch angesteuertes Abgasrückführungsventil 18. Die Sauganlage umfaßt ein Saugrohroberteil, wobei lediglich ein Luftsammler 20 dargestellt ist, mit Austrittsfenstern 22 zu vier in Figur 3 dargestellten Saugkanälen und einem Eintrittsfenster 24 für Ansaugluft 26.

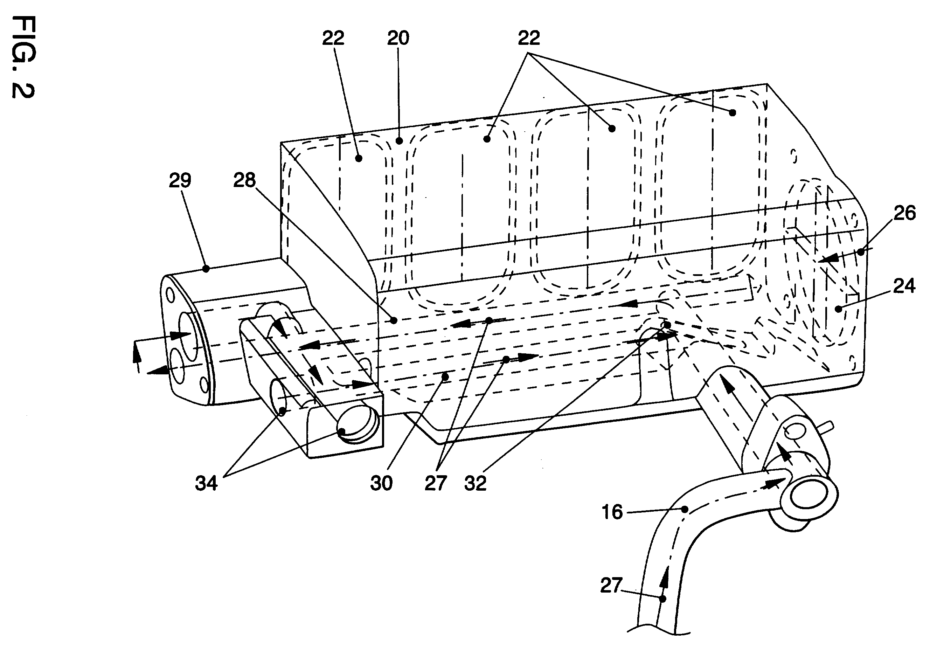

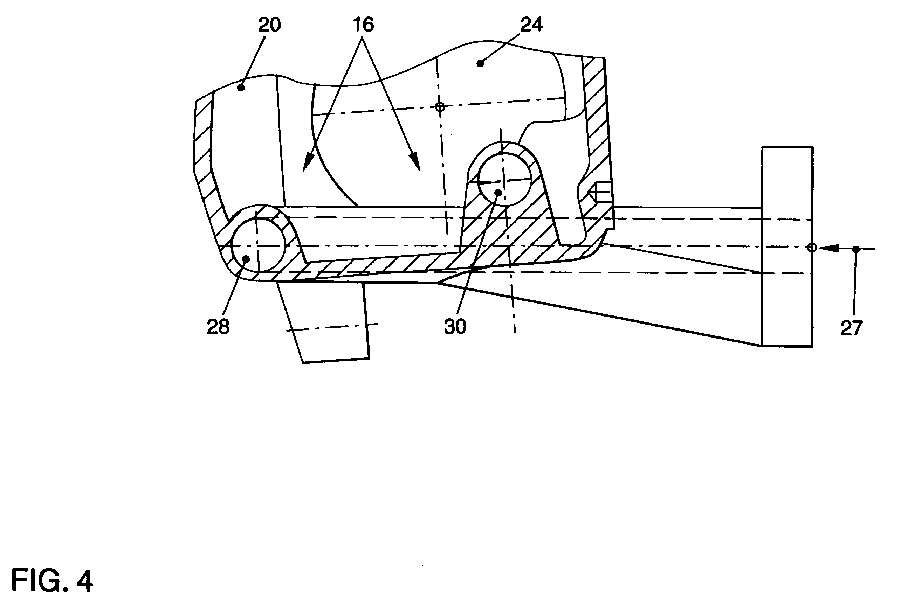

Wie im Detail z. B. aus Figuren 2 und 4 ersichtlich, verläuft ein Teil der Abgasrückführungsleitung 16 innerhalb des Luftsammlers 20 und in thermischen Kontakt mit Ansaugluft 26, so daß letztere das in der Abgasrückführungsleitung 16 rückgeführte Abgas 27 abkühlt. Hierbei ist ein erster Abgasrückführungsleitungsteil 28 quer zu den Austrittsfenstern 22 verlaufend vorgesehen, welcher einstückig mit dem Luftsammler 20 ausgebildet ist und zu dem am Luftsammler 20 über einen Flansch 29angeflanschten, in der Fig. 2 nicht dargestellten Abgasrückführungsventil 18 verläuft. Von dem Abgasrückführungsventil 18 weg verläuft ein zweiter Abgasrückführungsleitungsteil 30, welcher ebenfalls einstückig mit dem Luftsammler 20 ausgebildet ist, zu einer Einlauframpe 32, welche akustische Problem vermeidet und eine Vermischung von rückgeführtem, gekühltem Abgas 27 mit kühler Ansaugluft 26 sicherstellt. Bei dem Abgasrückführungsventil 18 sind entsprechende Bohrungen für die Abgasrückführung mittels Verschlußdeckeln 34 verschlossen.

Durch den thermischen Kontakt und einen entsprechenden Wärmeübergang von dem heißen, rückgeführten Abgas 27 zu der kühlen Ansaugluft 26 innerhalb des Luftsammlers 20 wird eine ausreichende Kühlung des rückgeführten Abgases erzielt, so daß eine thermische Belastung des Abgasrückführungsventils 18 entsprechend reduziert ist und damit das Abgasrückführungsventil 18 dementsprechend kostengünstiger ausgeführt sein kann, da es nicht mehr für hohe Abgastemperaturen ausgelegt sein muß.

Wie insbesondere aus Fig. 1 ersichtlich, kann die Anbindung zwischen Abgasanlage und Sauganlage über ein kurze Abgasrückführungsleitung 16 erfolgen, so daß sich eine verringerte thermische Belastung eines Motorraumes in einem Kraftfahrzeug ergibt. Dies erzielt eine schwingungsarme Anbindung mit geringen Montagekosten. Da ferner die Abführung der Wärmeenergie des rückgeführten Abgases ständig durch die Ansaugluft erfolgt, erniedrigt sich dementsprechend eine Temperatur im Motorraum. Der geringe Bauraumbedarf der erfindungsgemäßen Lösung zur Abgasrückführung erzielt ferner eine entsprechende Gewichtsreduzierung, da weniger Bauteil notwendig sind.

Durch die ständig von der Ansaugluft 26 umströmten Abgasrückführungsleitungsteile 28 und 30 ergibt sich eine effizientere Kühlung. Da die Bestandteile des Saugrohres, üblicherweise Al bzw. Mg, einen etwa zehnmal höheren Wärmeleitkoeffizienten als Edelstahl aufweisen, ergibt sich ein besserer Wärmeübergang und damit eine bessere Abkühlung des rückgeführten Abgases 27 als bei herkömmlichen Abgasrückführungssystemen, welche eine Abgaskühlung lediglich in einem externen, aus Edelstahl gefertigten Rückführungsrohr vorsehen.

Überraschenderweise tritt keine negative Beeinflussung der Beladung der Zylinder und der Klopfgrenze durch die direkte Erwärmung der Ansaugluft in dem Saugrohr bzw. im Luftsammler 20 des Saugrohres und damit durch die Erhöhung der Ansauglufttemperatur insbesondere im Teillastbereich auf. Der Grund hierfür könnte u.a. dann liegen, daß sich die Abgaseinspeisung negativ auf die Entflammbarkeit des noch nicht entzündeten Kraftstoff-Luft-Gemisches in einer Brennkammer und somit im Vergleich zur Erhöhung der Ansauglufttemperatur positiv entgegengesetzt auf die Klopfgrenze auswirkt.

## Patentansprüche

1. Brennkraftmaschine, insbesondere eines Kraftfahrzeuges, mit einer Sauganlage (10) mit Saugrohr zur Verbrennungsluftversorgung und einer Abgasanlage (12), wobei zwischen der Abgasanlage (12) und der Sauganlage (10) eine Abgasrückführungsanlage mit einem Abgasrückführungsventil (18) und einer Abgasrückführungsleitung (16) zur Rückführung von Abgas (27) aus der Abgasanlage (12) an die Sauganlage (10) vorgesehen ist, **dadurch gekennzeichnet**, daß die Abgasrückführungsleitung (18, 28, 30) wenigstens teilweise in dem Saugrohr verlaufend und in thermischen Kontakt mit Saugluft (26) in dem Saugrohr angeordnet ist.

2. Brennkraftmaschine nach Anspruch 1, **dadurch gekennzeichnet**, daß das Saugrohr einen Luftsammler (20) aufweist, wobei der in dem Saugrohr befindliche Teil (28, 30) der Abgasrückführungsleitung (16) wenigstens teilweise in dem Luftsammler (20) angeordnet ist.

3. Brennkraftmaschine nach Anspruch 1 oder 2, **dadurch gekennzeichnet**, daß die Abgasrückführungsleitung (28, 30) einstückig mit dem Saugrohr ausgebildet ist.

4. Brennkraftmaschine nach einem der vorhergehenden Ansprüche, **dadurch gekennzeichnet**, daß das Abgasrückführungsventil (18) stromab des durch das Saugrohr verlaufenden Teiles (28, 30) der Abgasrückführungsleitung (16) angeordnet ist.

5. Brennkraftmaschine nach einem der vorhergehenden Ansprüche, **dadurch gekennzeichnet**, daß das Abgasrückführungsventil (18) an das Saugrohr, insbesondere an einen Luftsammler (20) des Saugrohres, angeflanscht ist.

6. Verfahren zum Rückführen von Abgas bei einer Brennkraftmaschine, insbesondere eines Kraftfahrzeuges, aus einem Abgasstrom in einen Saugluftstrom mit Saugrohr, **dadurch gekennzeichnet**, daß das rückgeführte Abgas vor einer Einspeisung in den Saugluftstrom derart durch das Saugrohr geführt wird, daß das heiße Abgas Wärme mit dem kühlen Saugluftstrom in dem Saugrohr austauscht.

7. Verfahren nach Anspruch 6, **dadurch gekennzeichnet**, daß das Abgas vor einem Abgasrückführungsventil durch das Saugrohr geführt wird.
